(19) Europäisches Patentamt
European Patent Office
Office européen des brevets

(11) Veröffentlichungsnummer: **0 639 624 A1**

(12) # EUROPÄISCHE PATENTANMELDUNG

(21) Anmeldenummer: **94112376.2**

(22) Anmeldetag: **08.08.94**

(51) Int. Cl.[6]: **C09B 57/12**, C08K 5/3465

(30) Priorität: **19.08.93 DE 4327855**
**22.11.93 DE 4339699**

(43) Veröffentlichungstag der Anmeldung:
**22.02.95 Patentblatt 95/08**

(84) Benannte Vertragsstaaten:
**CH DE FR GB LI**

(71) Anmelder: **BAYER AG**

**D-51368 Leverkusen (DE)**

(72) Erfinder: **Roschger, Peter, Dr.**
**Adamsstrasse 24**
**D-51063 Köln (DE)**
Erfinder: **Hederich, Volker, Dr.**
**Hufelandstrasse 44**
**D-51061 Köln (DE)**
Erfinder: **Michaelis, Stephan, Dr.**
**Paul-Klee-Strasse 15c**
**D-51375 Leverkusen (DE)**
Erfinder: **Bacher, Erwin, Dr.**
**Finkenweg 4**
**D-51467 Bergisch Gladbach (DE)**
Erfinder: **Schneider, Jürgen, Dr.**
**Am Thelensiefen 9**
**D-51519 Odenthal (DE)**

(54) **Phthaloperinonfarbstoffe.**

(57) Phthaloperinonfarbstoffe der allgemeinen Formel (I)

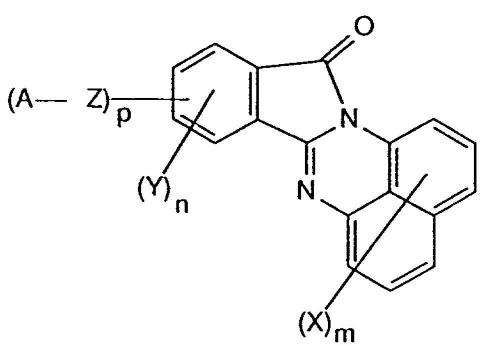

(I)

worin
Z $SO_2$ oder CO bedeutet,
A für gegebenenfalls substituiertes Alkyl oder Aryl steht,
und die übrigen Substituenten die in der Beschreibung genannten Bedeutungen haben, werden durch Kondensation entsprechender Phthalsäuren bzw. deren funktioneller Derivate und gegebenenfalls substituierten 1,8-Naphthalindiaminen hergestellt.

Die erfindungsgemäßen Farbstoffe besitzen sehr gute Echtheiten und werden in Verfahren zum Massefärben von Kunststoffen eingesetzt.

EP 0 639 624 A1

Die Erfindung betrifft Perinonfarbstoffe, ein Verfahren zu ihrer Herstellung und ihre Verwendung zum Massefärben von Kunststoffen.

In DE-A-22 36 555 sind Acyloxyphthaloperinone beschrieben, die allerdings noch gewisse Nachteile aufweisen. Es wurden nun Phthaloperinonfarbstoffe der allgemeinen Formel (I) gefunden

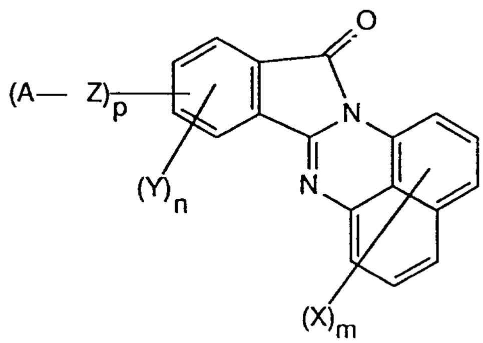

(I),

worin

- Z $SO_2$ oder CO bedeutet,
- A für gegebenenfalls substituiertes Alkyl oder Aryl steht,
- X für $C_1$-$C_6$-Alkyl, Halogen, $C_1$-$C_6$-Alkoxy, $C_1$-$C_7$-Acyloxy oder für einen ankondensierten cycloaliphatischen Ring steht,
- Y für $C_1$-$C_6$-Alkyl, $C_6$-$C_{10}$-Aryl, Halogen, $C_1$-$C_6$-Alkoxy, $C_1$-$C_7$-Acyloxy oder eine gegebenenfalls durch $C_1$-$C_7$-Acyl oder $C_1$-$C_6$-Alkyl substituierte Aminogruppe steht,
- m eine Zahl von 0 bis 6,
- n eine Zahl von 0 bis 3,
  und
- p 1 oder 2 bedeutet,
  n + p für eine Zahl von 1 bis 4 steht und
  für m >1 X jeweils verschiedene oder gleiche der obengenannten Bedeutungen haben kann,
  und
  für n >1 Y jeweils verschiedene oder gleiche der obengenannten Bedeutungen haben kann.

Besonders bevorzugte Phthaloperinone sind solche, worin A für $C_1$-$C_{18}$-Alkyl steht, das gegebenenfalls ungesättigt ist und/oder weitere Substituenten wie beispielsweise Halogen wie Cl, F, Br, $C_1$-$C_4$-Alkoxy, Phenoxy oder gegebenenfalls durch Halogen, $C_1$-$C_4$-Alkyl oder $C_1$-$C_4$-Alkoxy substituiertes Phenyl tragen kann, oder

für Phenyl oder Naphthyl steht, das gegebenenfalls durch Halogen, $C_1$-$C_4$-Alkyl, Cyan, $C_1$-$C_4$-Alkylmercapto, $C_1$-$C_4$-Alkylcarbonylamino, Phenyl, Phenoxy oder $C_1$-$C_4$-Alkoxy substituiert sein kann, und

- X für Chlor, Brom, Fluor, $OCH_3$, $OC_2H_5$, $OCH_2(C_6H_5)$, $OC_3H_7$, Methyl, Ethyl, n-Propyl, Isopropyl, n-Butyl, Isobutyl, sec.-Butyl, tert.-Butyl oder einen vorzugsweise in peri-Stellung, d.h. jeweils in para-Stellung zu den N-Atomen ankondensierten cycloaliphatischen 5- oder 6-gliedrigen Ring, wobei $-C_6H_5$ hier und auch im folgenden für Phenyl steht,
- Y für Fluor, Chlor, Brom, $OCH_3$, $NHCOCH_3$, $N(C_2H_5)_2$, Methyl, Ethyl, n-Propyl, Isopropyl, n-Butyl, Isobutyl, sec.-Butyl, tert.-Butyl oder ein gegebenenfalls substituiertes Phenyl steht,
- m eine Zahl von 0 bis 4,
- n eine Zahl von 0 bis 2,
- p 1 oder 2 bedeutet, und
  n + p eine Zahl von 1 bis 3 bedeutet.

In einer ganz besonders Ausführungsform bedeutet

- X Chlor, Brom, Methyl, Ethyl oder einen in peri-(4,5)-Stellung ankondensierten cycloaliphatischen 5- oder 6-Ring,
- m eine Zahl von 0 bis 2,
- n die Zahl 0 und
- p 1 oder 2,
  und
  A und Z haben die obengenannte Bedeutung.

In einer ganz besonders bevorzugten Ausführungsform steht m für 0.

In einer weiteren ganz besonders bevorzugten Ausführungsform steht p für 1.

Die aus A und Z gemeinsam gebildeten Alkylcarbonyle sind beispielsweise:
Acetyl, Propionyl, Butyryl, 1-Methyl-butyryl, 2-Butyl-butyryl, 1-Ethyl-butyryl, Dimethyl-propionyl, Pentanoyl, Hexanoyl, 1-Ethyl-hexanoyl, Heptanoyl, Octanoyl, Nonanoyl, Decanoyl, Dodecanoyl, Tetradecanonyl, Hexadecanoyl, Octadecanoyl, Ethoxyacetyl, Cyclohexylcarbonyl, 4-Methyl-cyclohexylcarbonyl, 3,5-Dimethyl-cyclohexylcarbonyl, Phenylacetyl, $\beta$-Phenylpropionyl, 4-Methylphenylacetyl, Phenoxyacetyl, 4-Chlorphenoxyacetyl und Cinnamoyl.

Die aus A und Z gemeinsam gebildeten Arylcarbonylreste sind beispielsweise:
Benzoyl, 2-, 3- und 4-Chlorbenzoyl, 2-, 3- und 4-Methylbenzoyl, 4-Methoxybenzoyl, 4-Ethoxybenzoyl, 2,3-Dichlorbenzoyl, 3,5-Dimethylbenzoyl, 4-Phenylbenzoyl, Naphthoyl-1, Naphthoyl-2, 2-Methoxy-naphthoyl-1.

Die aus A und Z gemeinsam gebildeten Alkylsulfonylreste sind beispielsweise:
Methansulfonyl, Ethansulfonyl, n-Propansulfonyl, n-Butansulfonyl, n-Octansulfonyl, n-Dodecansulfonyl, n-Hexadecansulfonyl, $\beta$-Methoxy-ethansulfonyl, $\beta$-Ethoxy-ethansulfonyl, Cyclohexansulfonyl, 4-Methyl-cyclohexansulfonyl.

Die aus A und Z gemeinsam gebildeten Arylsulfonylreste sind beispielsweise:
Benzolsulfonyl, 4-Methylbenzolsulfonyl, 4-Methoxybenzolsulfonyl, 4-Isopropylbenzolsulfonyl, 2- oder 4-Chlorbenzolsulfonyl, 2,4-Dichlorbenzolsulfonyl, 4-Methylmercaptobenzolsulfonyl, 4-Acetaminobenzolsulfonyl, 1-Naphthalinsulfonyl, 2-Naphthalinsulfonyl.

Besonders bevorzugt sind jene Farbstoffe, in welchen A und Z gemeinsam für Benzoyl oder Benzolsulfonyl stehen.

Die ganz besonders hervorzuhebende Ausführungsform der erfindungsgemäßen Farbstoffe entspricht den Formeln (IIa), (IIb), (IIIa) und (IIIb)

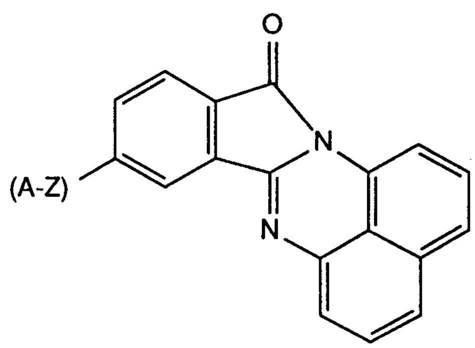

(IIa)

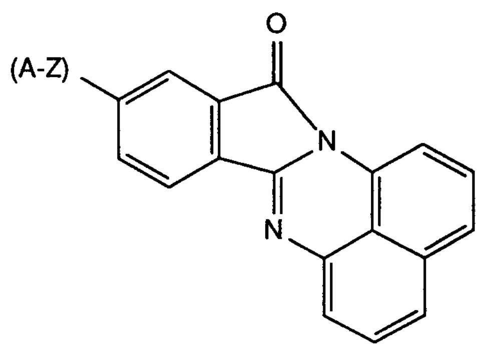

(IIb)

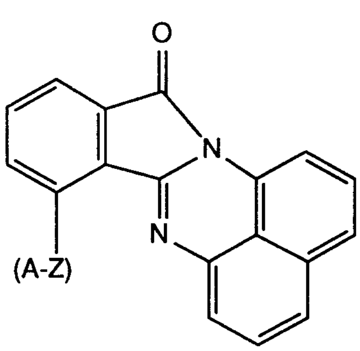

(IIIa)

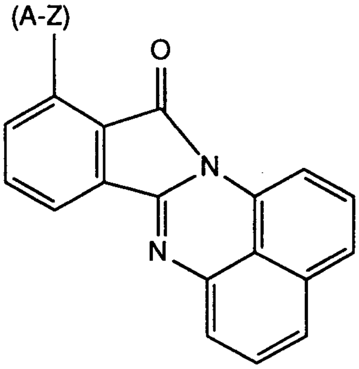

(IIIb)

oder beliebig zusammengesetzten Mischungen daraus, wobei bevorzugt beliebig zusammengesetzte Mischungen der Isomeren (IIa) und (IIb) bzw. (IIIa) und (IIIb) zu nennen sind.

Die Erfindung betrifft auch ein Verfahren zur Herstellung der erfindungsgemäßen Farbstoffe der Formel (I) durch Kondensation von Phthalsäuren der Formel (IV) bzw. deren funktionellen Derivaten, vorzugsweise den Anhydriden,

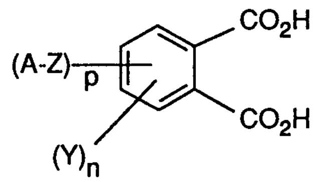

(IV),

in welcher

A, Z, Y, n und p die genannte Bedeutung besitzen,

mit Naphthalin-1,8-diaminen der Formel (V)

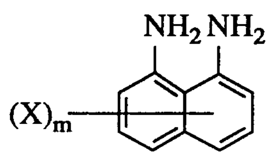

(V),

in welcher

X und m die angeführte Bedeutung haben,

in einem molaren Verhaltnis von 1:0,8 bis 1:1,2, vorzugsweise in äquimolaren Mengen, bei einer Temperatur von 50-220 °C, gegebenenfalls in Gegenwart eines Katalysators, gegebenenfalls unter Druck und gegebenenfalls in Gegenwart eines Lösungsmittels.

Die Kondensation kann demnach in der Schmelze oder vorteilhafter in einem Lösungsmittel durchgeführt werden.

Das Verfahren in der Schmelze erfolgt vorzugsweise bei einer Temperatur von 120-180 °C, und das Verfahren in einem Lösungsmittel erfolgt vorzugsweise bei 80-150 °C.

Das Reaktionswasser wird vorzugsweise destillativ aus dem Reaktionsgemisch entfernt.

Die Isolierung des Produktes erfolgt vorzugsweise durch Filtration, wobei der Reaktionsmischung zuvor ein Fällend wirkendes Lösungsmittel zugesetzt werden kann.

So entstehen z.B. aus 1,8-Diaminonaphthalin und in 4-Stellung durch A-Z substituierten Phthalsäuren Isomerenmischungen aus Farbstoffen der Formeln (IIa) und (IIb) bzw. aus dem genannten Amin und in 3-Stellung durch A-Z substituierten Phtlalsäuren Isomerenmischungen aus Verbindungen der Formeln (IIIa) und (IIIb). Liegt die eingesetzte durch A substituierte Phthalsäure jedoch selbst als Mischung der 3- und 4-Isomeren vor, so erhält man Mischungen der isomeren Farbstoffe der Formeln (IIa), (IIb), (IIIa) und (IIIb).

Geeignete Lösungsmittel für die Reaktion sind beispielsweise: Chlorbenzol, o-Dichlorbenzol, Trichlorbenzol, Xylol, Dimethylformamid, N-Methylpyrrolidon, Eisessig, Propionsäure, Phenol, Kresole, Phenoxyethanol, Glykole und deren Mono- und Dialkylether, Alkohole, z.B. Methanol, Ethanol, i-Propanol, Wasser und wäßrige Lösungsmittel wie z.B. verdünnte Schwefelsäure u.a..

Gegebenenfalls kann die Reaktion unter Zusatz eines sauren Katalysators erfolgen.

Geeignete Katalysatoren sind beispielsweise: Zinkchlorid, p-Toluolsulfonsäure, Salzsäure, Schwefelsäure, organische Säuren wie z.B. Eisessig oder Benzoesäure u.a..

Bei Verwendung von Katalysatoren werden vorzugsweise bis zu 0,1 Mol Äquivalente, bezogen auf die Komponente der Formel (IV), eingesetzt.

Ähnliche Verfahren sind bereits aus D.R.P. 202 354, Chem. Ber. 75 (1942), 719, und Liebigs Ann. Chem. 365 (1909), 128, bekannt.

Die entsprechenden Phthalsäuren (bzw. deren funktionelle Derivate) lassen sich z.B. wie in US-A 5 061 810; US 1 155 588; EP 245 729; Zh. Prikl. Khim. 49, 1353-8(1976); Zh. Org. Khim. 14, 1046-51 (1978); ibid. 9, 121-8 (1973); DE 2 243 283 oder in Analogie dazu herstellen.

Von besonderem Interesse aufgrund der industriell gut durchführbaren Reaktionsbedingungen ist daher die Verfahrensvariante, die dadurch gekennzeichnet ist, daß man Säurechloride der Formel (VI)

A - Z - Cl (VI)

mit o-Dialkylbenzolen der Formel (VII)

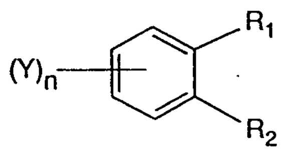

(VII)

in Gegenwart saurer Katalysatoren im Sinne einer Friedel-Crafts-Acylierung zu Verbindungen der Formel (VIII)

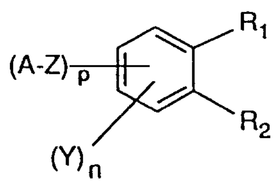

(VIII)

umsetzt und diese in einem zweiten Schritt zu Phthalsäuren der Formel (IV) oxidiert. Anstelle von Säurechloriden der Formel (VI), in welchen Z gleich CO ist, lassen sich auch die entsprechenden Benzotrichloride A-$CCl_3$ verwenden.

Nicht vorbeschrieben und daher ebenfalls Gegenstand der Erfindung ist das obengenannte Verfahren, bei dem

| | |
|---|---|
| Z | = $SO_2$, |
| A | = Phenyl, das gegebenenfalls durch bis zu zwei Chlor- oder ein Bromatom substituiert ist, oder 1- oder 2-Naphthyl, |
| p | = 1 oder 2, vorzugsweise 1, |
| n | = 0 ist und |
| $R_1$ und $R_2$ | unabhängig voneinander für $C_1$-$C_4$-Alkyl, vorzugsweise Methyl, oder gemeinsam für einen Tri- oder Tetramethylenrest stehen. |

Als saure Katalysatoren verwendet man vorzugsweise Eisen(III)-chlorid oder Aluminiumchlorid. Weitere geeignete Katalysatoren sind Zinn(IV)-chlorid, Titan(IV)-chlorid, Aluminiumbromid, Zinkchlorid, Eisen u.a..

Der Katalysator wird in Mengen von 0,0001 bis 1,1 Mol pro Mol Sulfochlorid der Formel (VI) eingesetzt, vorzugsweise 0,0005 bis 0,01 Mol.

Das Molverhältnis der Verbindungen der Formel (VI) und (VII) kann für Verbindungen der Formel (VIII) mit p = 1 von 1,5:1 bis 1:100, vorzugsweise 0,9:1 bis 1:0,9, für p = 2 von 1,5:1 bis 3:1, vorzugsweise von 2:1 bis 2,5:1, betragen. Die im Überschuß eingesetzte Komponente kann selbst als Lösungsmittel fungieren, ebenso kann man aber zusätzlich ein inertes Lösungsmittel wie Nitrobenzol, o-Dichlorbenzol, 1,2-Dichlorethan u.a zusetzen. Vorzugsweise arbeitet man ohne Lösungsmittel in der Schmelze.

Die Reaktionstemperatur beträgt 0 bis 180 °C für p = 1, 80 bis 200 °C für p = 2.

Überschüsse an o-Dialkylbenzol (VII) oder Lösungsmittel werden destillativ entfernt, gegebenenfalls im Vakuum oder unter Zuhilfenahme von Wasserdampf. Das erhaltene Produkt wird vorzugsweise direkt ohne weitere Reinigung verwendet.

Die Oxidation führt man nach an sich für Dialkylaromaten bekannten Methoden durch. Bevorzugtes Oxidationsmittel ist Salpetersäure. Ferner geeignet sind Sauerstoff, Luft, (Di)chromate, Chromsäure, Permanganate, Braunstein, Hypochlorite u.a..

Bei der Verwendung von Salpetersäure, deren Konzentration 5 bis 50 % betragen kann, arbeitet man vorzugsweise unter Druck bei Temperaturen von 120 bis 180 °C. Die Salpetersäure kann mit Luft oder Sauerstoff regeneriert werden, was bei niederen Salpetersäurekonzentrationen von Vorteil sein kann, ebenso kann die Durchführung als Kreisprozeß günstig sein.

Geeignete Ausgangsmaterialien der Formel (IV) sind beispielsweise:
4-(Benzolsulfonyl)phthalsäure, 3-(Benzolsulfonyl)phthalsäure, 4-(4'-Methyl-benzolsulfonyl)phthalsäure, 3-(3'-Methyl-benzolsulfonyl)phthalsäure, 4-(2'-Methylbenzolsulfonyl)phthalsäure, 4-(4'-tert.-Butyl-benzolsulfonyl)-phthalsäure, 4-(2',4'-Dimethyl-benzolsulfonyl)phthalsäure, 4-(4'-Chlorbenzolsulfonyl)phthalsäure, 4-(3'-Chlorbenzolsulfonyl)phthalsäure, 3-(2'-Chlorbenzolsulfonyl)phthalsäure, 4-(4'-Fluor-benzolsulfonyl)phthalsäure, 4-(4'-Brom-benzolsulfonyl)phthalsäure, 4-(3',4'-Dichlor-benzolsulfonyl)phthalsäure, 4-(4'-Methoxy-benzolsulfonyl)phthalsäure, 3-(4'-Methoxy-benzolsulfonyl)phthalsäure, 4-(3'-Methoxy-benzolsulfonyl)phthalsäure, 4-(4'-Ethoxy-benzolsulfonyl)phthalsäure, 4-(3'-Butoxy-benzol-sulfonyl)phthalsäure, 4-(Methansulfonyl)phthalsäure, 3-(Methansulfonyl)phthalsäure, 4-(Ethansulfonyl)phthalsäure, 4-(n-Butansulfonyl)phthalsäure, oder 4-(Cyclohexansulfonyl)phthalsäure, 4-(Acetyl)phthalsäure, 4-(Propionyl)phthalsäure, 4-(Butyryl)phthalsäure, 4-(Cyclohexancarbonyl)phthalsäure, 4-(Benzoyl)phthalsäure, 3-(Benzoyl)phthalsäure, 4-(Methyl-benzoyl)phthalsäure, 4-(Ethyl-benzoyl)phthalsäure, 3-(Chlor-benzoyl)phthalsäure, 4-(Chlor-benzoyl)phthalsäure, 4-(Dichlor-benzoyl)phthalsäure, 4-(Dimethyl-benzoyl)phthalsäure, 4-(tert.-Butyl-benzoyl)phthalsäure, 4-(Fluor-benzoyl)-phthalsäure, 4-(Acetylamino-benzoyl)phthalsäure, 4-(Methylmercapto-benzoyl)phthalsäure, 4-(Methan-sulfonyl-benzoyl)phthalsäure, 4-(Methoxy-benzoyl)phthalsäure, 4-(Ethoxy-benzoyl)phthalsäure, und 4-(Butoxy-benzoyl)phthalsäure oder deren Anhydride.

Die eingesetzten substituierten Naphthalin-1,8-diamine lassen sich z.B. nach D.R.P 122 475; D.R.P 108 166; J. Chem. Soc. (1932) 2310; ibid. (1936), 556, 1338; ibid. (1945), 454, 543; ibid. (1951) 221; J. prakt. Chem. 94 (1916), 45; Compt. rend. 224 (1947), 1569; An. Soc. espan. 31 (1933), 861, 876; J. Org. Chem. 24 (1959), 214 u.a. oder in Analogie dazu herstellen.

Geeignete Naphthalin-1,8-diamine der Formel (V) sind:
1,8-Naphthalindiamin, Chlor-1,8-naphthalindiamine, Dichlor-1,8-naphthalindiamine, Brom-1,8-naphthalindiamine, Methyl-1,8-naphthalindiamine, Dimethyl-1,8-naphthalindiamine, Methyl-chlor-1,8-naphthalindiamine, Methoxy-1,8-naphthalindiamine, Ethoxy-1,8-naphthalindiamine, Acetamino-1,8-naphthalindiamine und 4,5-Dimethylennaphthalin-1,8-diamin, wobei die Substituenten vorzugsweise in 2-, 4-, 5- oder 7-Stellung des Naphthalins gebunden sind.

Die Erfindung betrifft weiterhin ein Verfahren zur Herstellung von Verbindungen der allgemeinen Formel (IX)

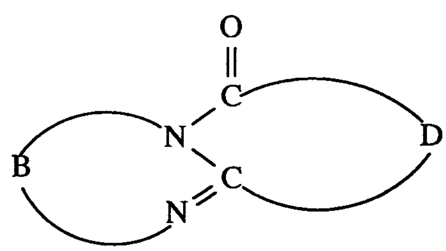

(IX),

unter die auch die erfindungsgemäßen Farbstoffe der Formel (I) fallen,
das dadurch gekennzeichnet ist, daß man aromatische Dicarbonsäuren der Formel (X)

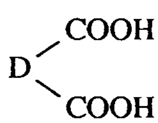

(X)

bzw. deren Anhydride oder Ester mit aromatischen Diaminen der Formel (XI)

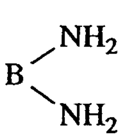

(XI)

in einem phenolischen Lösungsmittel umsetzt, wobei bedeuten:

D gegebenenfalls substituiertes ortho-Phenylen, 2,3-Naphthylen, peri(1,8)-Naphthylen oder Arylen

aus mehr als zwei miteinander kondensierten Benzolringen und

B gegebenenfalls substituiertes ortho-Phenylen, ortho-Naphthylen, peri(1,8)-Naphtylen oder Arylen aus mehr als zwei miteinander kondensierten Benzolringen,

wobei die Arylenreste D und B in Formel (IX), die mehr als zwei miteinander kondensierte Benzolringe aufweisen, in ortho- oder entsprechend einer peri-Stellung im Naphthalin verbrückt sind.

Die peri-Stellung entspricht eigentlich der 1,8-Stellung im Naphthalin. Diese Bedeutung wird allerding sowohl in der Literatur als auch im Sinne der vorliegenden Anmeldung auch auf Arylene ausgeweitet, die mehr als zwei miteinander kondensierte Benzolringe aufweisen.

In einer bevorzugten Ausführungsform des Verfahrens bedeuten:

D gegebenenfalls substituiertes ortho-Phenylen, 2,3-Naphthylen oder peri(1,8)-Naphthylen und

B gegebenenfalls substituiertes ortho-Phenylen, ortho-Naphthylen, peri(1,8)-Naphthylen oder peri-Acenaphthylen.

Bei den erfindungsgemäß herzustellenden Verbindungen der Formel (IX) handelt es sich um gelbe bis rote Farbstoffe, die zum Färben von synthetischen Fasern aus beispielsweise Polyestermaterialien, insbesondere aber zum Massefärben von Kunststoffen eingesetzt werden. Es ist bekannt, diese Farbstoffe durch Zusammenschmelzen von Verbindungen der Formel (X) und (XI) (F. Sachs A. 365 (1909), 53 bis 166) oder durch Kondensation in inerten höhersiedenden Lösungsmitteln, wie chlorierten aromatischen Kohlenwasserstoffen (DE-A-2 424 542), in Nitrobenzol (BE-A-600 302), Eisessig (DE-A-2 236 555), Dimethylformamid (DE-2 157 547) oder N-Methylpyrrolidon (CH-A-561 763) herzustellen. Das erfindungsgemäße Verfahren betrifft demgegenüber die Verwendung von phenolischem Lösungsmittel, vorzugsweise von gegebenenfalls durch Alkylgruppen mit 1 bis 16 C-Atomen und/oder durch Chlor substituiertem Phenol zur Kondensation von Diaminoaromaten der Formel (XI) und aromatischen Dicarbonsäuren der Formel (X) bzw. deren Anhydriden oder Estern.

Das erfindungsgemäße Verfahren ermöglicht gegenüber dem Stand der Technik die Herstellung besonders reiner Farbstoffe der Formel (IX) sowie eine problemlose Rückgewinnung des eingesetzten Lösungsmittels, wobei die Art und Anzahl der im phenolischen Lösungsmittel vorkommenden Alkylgruppen sowie gegebenenfalls die Anwesenheit von Chlor nicht wesentlich sind.

Bevorzugt eignen sich als Lösungsmittel beispielsweise Phenol, ortho-, meta- oder para-Kresol, Dimethylphenole, p-tert.-Butylphenol, Nonylphenol oder Chlorphenol oder Gemische davon. Besonders bevorzugt ist Phenol als Lösungsmittel.

Die Menge des Lösungsmittels ist breit variierbar, sie kann z.B. die gleiche bis 10-fache Gewichtsmenge des aus den Edukten (X) und (XI) erhältlichen Farbstoffes der Formel (IX), vorzugsweise aber das 2- bis 5-fache davon betragen.

Bei der Kondensation der Verbindungen (X) und (XI) ist es nicht erforderlich, eine der beiden im Überschuß einzusetzen, andererseits stört ein Überschuß nicht, da er mit dem Lösungsmittel entfernt werden kann. Die Ausgangsverbindungen der Formeln (X) und (XI), bzw. die funktionellen Derivate von (X) in Form der Dicarbonsäureanhydride oder Ester sind bekannt oder nach bekannten Methoden erhältlich.

Als mögliche Substituenten für die aromatischen Dicarbonsäuren der Formel (X) bzw. Diamine der Formel (XI) sind beispielsweise die oben unter Y, X und ⟮Z-A) genannten Bedeutungen sowie Nitro, Aryl, Aryloxysulfonyl, Hydroxy, Alkyloxy, Aryloxy, ein gegebenenfalls durch Alkyl oder Aryl substituiertes Aminosulfonyl oder ein ankondensierter heterocyclischer Ring.

Bevorzugte Substituenten sind: Chlor, Fluor, Brom, Nitro, Methoxy, $NH_2$, Benzyloxy, Hydroxy, $-SO_2O-(C_6H_5)$, $-SO_2N(CH_3)_2$, $-SO_2NHCH_3$, Methyl, Ethyl, n-Propyl, iso-Propyl, n-, sek-, tert.-Butyl, $NHCOCH_3$, $-N-(C_2H_5)_2$, gegebenenfalls substituiertes Phenyl, Benzoyl oder Benzolsulfonyl.

Als aromatische Dicarbonsäuren der Formel (X) sind bevorzugt:

Phthalsäure, 3- oder 4-Chlorphthalsäure, Dichlorphthalsäuren, Trichlorphthalsäuren, Tetrachlorphthalsäure, Tetrabromphthalsäure, 3-Methylphthalsäure, 3,5-Dimethylphthalsäure, 4-Methylphthalsäure, 4-Phenoxyphthalsäure, 3-Hydroxyphthalsäure, 4-Phenylphthalsäure, 4-Phenylsulfonylphthalsäure, 3-Phenylsulfonylphthalsäure, 4-Benzoylphthalsäure, 3-Benzoylphthalsäure, 4-Nitrophthalsäure, 4-Acetaminophthalsäure, 3-Benzoylaminophthalsäure, 4-Aminosulfonylphthalsäure, 4-Phenoxysulfonylphthalsäure, 3-Acetoxyphthalsäure, Trimellithsäure, Naphthalin-2,3-dicarbonsäure, Naphthalin-1,8-dicarbonsäure, 4-Chlor-naphthalin-1,8-dicarbonsäure, 4-Phenylmercapto-naphthalin-1,8-dicarbonsäure, 4,5-Ethylen-naphthalin-1,8-dicarbonsäure, Anthracen-1,2-dicarbonsäure.

Als aromatische Diamine der Formel (XI) sind bevorzugt:

o-Phenylendiamin, Chlor-o-phenylendiamine, Dichlor-o-phenylendiamine, Methyl-o-phenylendiamine, Ethyl-o-phenylendiamine, Methoxy-o-phenylendiamine, Acetamino-o-phenylendiamine, Phenyl-o-phenylendiamine, Naphthylen-o-diamine, ferner 1,8-Naphthylendiamin, Chlor-1,8-naphthylendiamine, Dichlor-1,8-naphthylendiamine, Methyl-1,8-naphthylendiamine, Dimethyl-1,8-naphthylendiamine, Methoxy-1,8-naphthylendiamine, Ethoxy-1,8-naphthylendiamine, Acetamino-1,8-naphthylendiamine und 1,8-Diaminoacenaphthalin.

In einer weiteren bevorzugten Verfahrensvariante wird ein gegebenenfalls substituiertes peri-Naphthylendiamin als Verbindung der Formel (XI) eingesetzt, insbesondere 1,8-Naphthylendiamin.

Das erfindungsgemäße Verfahren wird im allgemeinen so durchgeführt, daß man das phenolische Lösungsmittel in flüssiger Form bei Raumtemperatur oder aufgeschmolzen bei einer Temperatur von 60 bis 150 °C, vorzugsweise 60 bis 120 °C, vorzugsweise unter Inertgasatmosphäre, insbesondere unter Stickstoff, vorlegt und die Komponenten der Formeln (X) und (XI) in beliebiger Reihenfolge oder gleichzeitig einträgt. Die Menge an phenolischem Lösungsmittel richtet sich im wesentlichen nach der Löslichkeit der Reaktionsprodukte, sie beträgt die gleiche bis 10-fache Gewichtsmenge, bezogen auf die zu erwartende Verbindung der Formel (IX), vorzugsweise aber das 2- bis 5-fache davon. Die Lösungsmittelmenge kann aber auch kleiner als die gleiche Gewichtsmenge der zu erwartenden Verbindung der Formel (IX) sein. Das Eintragen der Reaktionskomponenten der Formeln (X) und (XI) kann je nach Starttemperaturen unter Ausnutzung der Reaktionswärme oder bei der jeweiligen Eintragstemperatur unter Kühlung erfolgen, anschließend wird auf Reaktionstemperatur erhöht, wobei das Reaktionswasser abdestilliert werden kann. Die Umsetzung erfolgt im allgemeinen bei einer Reaktionstemperatur von 80 bis 200 °C, vorzugsweise bei 100 bis 150 °C, wobei sowohl unter Normaldruck, als auch unter Druck bei 1 bis 10 bar, bevorzugt bei 1 bis 5 bar, kondensiert werden kann.

Die Bildung des Reaktionsproduktes der Formel (IX) ist vielfach nach Erreichen der Reaktionstemperatur abgeschlossen. Normalerweise betragen die Reaktionszeiten 1 bis 10 Stunden. Bei Verwendung der Anhydride der Dicarbonsäuren der Formel (X) etwa 1 bis 3 Stunden. Die Dicarbonsäuren können zuvor durch Erhitzen auf Temperaturen von beispielsweise 100 bis 200 °C in ihre Anhydride überführt werden, sie können auch in wasserfeuchter Form zum Einsatz kommen, wobei vor oder während der Kondensation destillativ entwässert werden kann.

Die Umsetzung zu den Verbindungen der Formel (IX) kann gegebenenfalls in Gegenwart saurer Katalysatoren durchgeführt werden, wobei neben anorganischen Säuren wie beispielsweise Borsäure insbesondere organische Säuren wie Essigsäure, Propionsäure oder besonders Benzoesäure in Betracht kommen. Man kann diese in Mengen von 0,01 bis 1 Mol pro Mol der zu erwartenden Verbindung der Formel (IX) einsetzen. In einer Verfahrensvariante können die Einsatzprodukte der Formeln (X) und (XI) in einem niedrigsiedenden Lösungsmittel wie beispielsweise Methanol oder Ethanol zur Abspaltung von 1 Mol Wasser pro Mol Einsatzprodukte der Formeln (X) und (XI) vorkondensiert werden, worauf unter Zugabe des phenolischen Lösungsmittels und unter Abdestillation des niedrigsiedenden Lösungsmittels auf die Reaktionstemperatur erwärmt und die Kondensation zu (IX) vervollständigt wird. In diesem Fall setzt man das niedrigsiedende Lösungsmittel in einer Menge von 1 bis 5, vorzugsweise 2 bis 3 Gew.-Teilen pro Gew.-Teil der zu erwartenden Verbindung der Formel (IX) zu und führt die erste Kondensationsstufe bei 20 bis 100 °C, vorzugsweise bei 50 bis 70 °C, durch.

Nach beendeter Kondensation können die gebildeten Verbindungen der Formel (IX) bei erhöhter, vorzugsweise bei Umgebungstemperatur, direkt durch Filtration isoliert und anschließend mit kaltem oder warmem Wasser oder mit organischen Lösungsmitteln gewaschen werden. Als organische Lösungsmittel kommen hierbei insbesondere niedere Alkohole wie Methanol, Ethanol oder Isopropanol in Frage, ferner aliphatische, cycloaliphatische oder aromatische Kohlenwasserstoffe wie beispielsweise Hexan, Cyclohexan oder Toluol, ferner aprotische Lösungsmittel wie Formamid, Dimethylformamid oder Sulfolan und andere Lösungsmittel wie Eisessig oder Acetonitril.

Bevorzugt werden die Reaktionsprodukte aber mit Wasser oder mit wassermischbaren Lösungsmitteln (Fällungsmitteln) wie Methanol oder Ethanol bei Temperaturen unter 120 °C, vorzugsweise in Bereichen von 100 bis 60 °C, bei Normaldruck oder unter 1 bis 15 bar Druck gefallt. Anschließend wird bei Temperaturen zwischen 0 und 80 °C, vorzugsweise bei 20 bis 50 °C durch Filtration isoliert, mit dem gleichen zur Fällung verwendeten Lösungsmittel und/oder einem Gemisch von beschriebenen Lösungsmitteln, sowie bei Verwendung von mit Wasser mischbaren Lösungsmitteln anschließend mit Wasser gewaschen und getrocknet, bzw. als wasserhaltiger Presskuchen zur Formierung eingesetzt.

Die erfindungsgemäß verwendeten phenolischen Lösungsmittel werden gegebenenfalls nach Abtrennung der verwendeten Fällungsmittel durch Destillation gegebenenfalls unter vermindertem Druck, zurückgewonnen. Die nach dem erfindungsgemäßen Verfahren erhaltenen Farbstoffe der Formel (IX) zeichnen sich durch hohe Reinheit bei gleichzeitig guten bis sehr guten Ausbeuten aus.

Die nach dem erfindungsgemäßen Verfahren hergestellten Farbstoffe werden zum Färben von synthetischen hydrophoben Fasermaterialien wie Zellulosetriacetat, Polyethylenterephthalat oder Polyamiden nach bekannten Färbeverfahren eingesetzt, insbesondere aber zum Spinn- und Massefärben von thermoplastischen Kunststoffen wie Polystyrol, Polyester, Polycarbonat sowie von Mischpolymerisaten wie Acrylnitril-Butadien-Styrol, Styrol-Acrylnitril usw.

Die erfindungsgemäßen Farbstoffe der Formel (I) eignen sich hervorragend zum Färben von Kunststoffen in der Masse.

Unter Massefärben werden hierbei insbesondere Verfahren verstanden, bei dem der Farbstoff in die geschmolzene Kunststoffmasse eingearbeitet wird, z.B. unter Zuhilfenahme eines Extruders, oder bei dem der Farbstoff bereits Ausgangskomponenten zur Herstellung des Kunststoffes, z.B. Monomeren vor der Polymerisation, zugesetzt wird.

Besonders bevorzugte Kunststoffe sind Thermoplaste, beispielsweise Vinylpolymere, Polyester und Polyamide.

Geeignete Vinylpolymere sind Polystyrol, Styrol-Acrylnitril-Copolymere, Styrol-Butadien-Copolymere, Styrol-Butadien-Acrylnitril-Terpolymere, Polymethacrylate u.a..

Weiterhin geeignete Polyester sind: Polyethylenterephthalate, Polybutylenterephthalate, Polycarbonate und Celluloseester.

Bevorzugt sind Polystyrol, Styrol-Mischpolymere, Polycarbonate und Polymethacrylat. Besonders bevorzugt ist Polystyrol.

Die erwähnten hochinolekularen Verbindungen können einzeln oder in Gemischen, als plastische Massen oder Schmelzen vorliegen.

Die erfindungsgemäßen Farbstoffe werden in feinverteilter Form zur Anwendung gebracht, wobei Dispergiermittel mitverwendet werden können aber nicht müssen.

Werden die Farbstoffe (I) nach der Polymerisation eingesetzt, so werden sie mit dem Kunststoffgranulat trocken vermischt oder vermahlen und dieses Gemisch z.B. auf Mischwalzen oder in Schnecken plastifiziert und homogenisiert. Man kann die Farbstoffe aber auch der schmelzflüssigen Masse zugeben und diese durch Rühren homogen verteilen. Das derart vorgefärbte Material wird dann wie üblich z.B. durch Verspinnen zu Borsten, Fäden usw. oder durch Extrusion oder im Spritzguß-Verfahren zu Formteilen weiterverarbeitet.

Da die Farbstoffe der Formel (I) gegenüber Polymerisationskatalysatoren, insbesondere Peroxiden, beständig sind, ist es auch möglich, die Farbstoffe den monomeren Ausgangsmaterialien für die Kunststoffe zuzusetzen und dann in Gegenwart von Polymerisationskatalysatoren zu polymerisieren. Dazu werden die Farbstoffe vorzugsweise in den monomeren Komponenten gelöst oder mit ihnen innig vermischt.

Die Farbstoffe der Formel (I) werden vorzugsweise zum Färben der genannten Polymeren in Mengen von 0,0001 bis 1 Gew.-%, insbesondere 0,01 bis 0,5 Gew.-%, bezogen auf die Polymermenge, eingesetzt.

Durch Zusatz von in den Polymeren unlöslichen Pigmenten, wie z.B. Titandioxid, können entsprechende wertvolle gedeckte Färbungen erhalten werden.

Titandioxid kann in einer Menge von 0,01 bis 10 Gew.-%, vorzugsweise 0,1 bis 5 Gew.-%, bezogen auf die Polymermenge, verwendet werden.

Nach dem erfindungsgemäßen Färbe-Verfahren erhält man transparente bzw. gedeckte brillante, orange bis violette Färbungen mit guter Hitzebeständigkeit sowie guter Licht- und Wetterechtheit.

In das erfindungsgemäße Färbe-Verfahren können auch Mischungen verschiedener Farbstoffe der Formel (I) und/oder Mischungen von Farbstoffen der Formel (I) mit anderen Farbstoffen und/oder anorganischen bzw. organischen Pigmenten eingesetzt werden.

Die Erfindung wird erläutert, jedoch nicht beschränkt auf die folgenden Beispiele, in denen die Teile gewichtsmäßig angegeben sind und Prozentangaben Gewichtsprozente (Gew.-%) bedeuten.

Beispiel 1

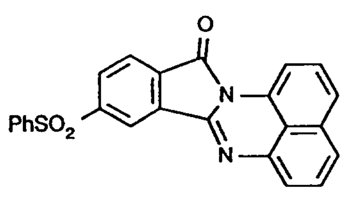

und

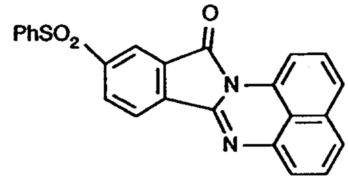

A) Darstellung

Eine Mischung aus 3,1 Teilen Naphthalin-1,8-diamin, 5,7 Teilen 4-Benzolsulfonylphthalsäureanhydrid und 30 Teilen Eisessig wird 10 Min. auf 80°C erhitzt. Nach dem Erkalten wird der erhaltene Niederschlag abgesaugt und mit Methanol und Wasser gewaschen.

Ausbeute: 7,7 Teile (95 %) einer Isomerenmischung aus den beiden Farbstoffen der obigen Formeln.

Die Darstellung des 4-Benzolsulfonylphthalsäureanhydrids kann folgendermaßen erfolgen:

4-Benzolsulfonyl-1,2-dimethylbenzol

110 g o-Xylol, 176 g Benzolsulfochlorid und 0,16 g Eisen(III)-chlorid werden bei Raumtemperatur zusammengegeben und innerhalb von 2 Stunden auf 110 °C erhitzt. Nach Beendigung der HCl-Entwicklung wird auf 140 °C erhitzt und das Produkt auf ein Blech ausgetragen. Beim Erkalten erstarrt die Schmelze zu einer farblosen Masse. Ausbeute: 243 g.

4-Benzolsulfonyl-phthalsäure

20 g des obigen Produktes werden in 600 ml Wasser und 200 ml 65%iger Salpetersäure suspendiert. Anschließend erhitzt man im Autoklaven 6 Stunden auf 160 °C, wobei sich ein Druck von 10 bis 13 atm einstellt. Nach dem Entspannen kühlt man auf ca. 0-5 °C ab und saugt den Niederschlag nach einigen Stunden ab. Er wird mit wenig Eiswasser gewaschen und getrocknet. Ausbeute: 18-22 g.

4-Benzolsulfonylphthalsäureanhydrid

19 g der freien Säure werden in 100 ml Acetanhydrid 10 Min. zum Sieden erhitzt. Anschließend kühlt man auf 5 °C ab und saugt den Niederschlag nach einigen Stunden ab. Ausbeute: 16 g.

B) Färbebeispiele

Beispiel a)

100 Teile Polystyrol-Granulat und 0,02 Teile des Farbstoffes aus Beispiel A) werden im Trommelmischer während 15 Minuten intensiv vermischt. Das trocken angefärbte Granulat wird bei 240 °C auf einer Schneckenspritzgießmaschine verarbeitet. Man erhält transparente, rote Platten von sehr guter Lichtechtheit. Anstelle von Polystyrol-Polymerisat können auch Mischpolymerisate mit Butadien und Acrylnitril verwendet werden. Setzt man zusätzlich 0,5 Teile Titandioxid zu, so erhält man farbstarke gedeckte Färbungen.

Beispiel b)

0,015 Teile des Farbstoffes aus Beispiel A) und 100 Teile Polymethylmethacrylat werden trocken vermischt und auf einem 1-Wellenextruder bei 230 °C homogenisiert. Das als Strang aus dem Extruder austretende Material wird granuliert. Es kann anschließend zu Formen verpreßt werden. Man erhält einen transparent rot-gefärbten Kunststoff mit guter Licht- und Wetterechtheit.

Beispiel c)

100 Teile eines handelsüblichen Polycarbonats werden in Form von Granulat mit 0,03 Teilen des Farbstoffes aus Beispiel A) trocken gemischt. Das so bestäubte Granulat wird auf einem 2-Wellenextruder bei 290 °C homogenisiert Man erhält eine transparente rote Färbung von guter Lichtechtheit. Das gefärbte Polycarbonat wird als Strang aus dem Extruder ausgetragen und zu Granulat verarbeitet. Das Granulat kann nach den üblichen Methoden der Konfektionierung thermoplastischer Massen verarbeitet werden.

Arbeitet man wie oben beschrieben, aber unter Zusatz von 1 % Titandioxid, so erhält man eine rote gedeckte Färbung.

Beispiel d)

Mit 100 Teilen Styrol-Acrylnitril-Copolymerisat werden 0,04 Teile des Farbstoffes aus Beispiel A) trocken vermischt und in einem 2-Wellenextruder bei 190 °C homogenisiert, granuliert und dann zu Formen auf übliche Weise verpreßt. Man erhält einen transparent roten Kunststoff von guter Lichtechtheit.

Beispiel e)

0,025 Teile des Farbstoffes aus Beispiel A) werden mit 100 Teilen Polyethylenterephthalat einer transparenten Typ vermischt und in einem 2-Wellenextruder bei 280 °C homogenisiert. Man erhält eine transparente, rote Färbung mit guter Lichtechtheit. Nach anschließender Granulierung kann der eingefärbte Kunststoff nach den üblichen Methoden der thermoplastischen Verformung verarbeitet werden. Arbeitet man unter Zusatz von 1 % Titandioxid, so erhält man eine gedeckte Färbung.

Beispiel f)

In 98,9 Teilen Styrol werden 0,05 Teile tert.-Dodecylmercaptan sowie 0,05 Teile des Farbstoffes aus Beispiel A) gelöst. Diese Lösung dispergiert man in einer Lösung aus 200 Teilen entsalztem Wasser, 0,3 Teilen teilverseiftem Polyvinylacetat (z.B. Mowiol® 50/88 der Fa. Hoechst) und 0,05 Teilen Dodecylbenzolsulfonat. Nach Zusatz von 0,1 Teilen Dibenzoylperoxid in 1 Teil Styrol wird die Dispersion unter kräftigem Rühren auf 80 °C erhitzt und die Polymerisation gestartet. Bei Anwendung folgender Polymerisationsbedingungen: 4 h bei 80 °C, 2 h bei 90 °C, 3 h bei 110 °C, 2 h bei 130 °C, erhält man das Polymerisat in einer Ausbeute von 98 % der Theorie. Das Polymerisat fällt in Form von Perlen an, die je nach Rührbedingungen einen Durchmesser von 0,1 bis 1,5 mm ($D_{50}$-Wert) aufweisen. Das Polymerisat wird durch Filtration vom Serum getrennt, bei 110 °C auf eine Restfeuchte von 0,5 % getrocknet. Nach dem Aufschmelzen in einem Mischaggregat (Heißwalze) werden 0,5 % Zinkstearat und 0,2 % Ionol® der

Fa. Shell ( ≙ 2,6-Di-tert.-butyl-p-cresol) zugemischt und das Polymerisat granuliert.

Das Polymerisat kann nach den üblichen Methoden der thermoplastischen Verformung, z.B. im Spritzguß-Verfahren, zu roten, transparenten Formteilen verarbeitet werden.

Beispiel g)

In 74,8 Teilen Styrol und 25 Teilen Acrylnitril werden 0,2 Teile tert.-Dodecylmercaptan sowie 0,01 Teile des Farbstoffes aus Beispiel A) gelöst, diese Lösung wird anschließend in einer Lösung aus 200 Teilen vollentsalztem Wasser und 0,2 Teilen eines mit Natriumhydroxid neutralisierten Copolymerisats von Styrol und Maleinsäureanhydrid dispergiert. Nach Zusatz von 0,1 Teilen Dibenzoylperoxid, gelöst in einem Teil Styrol, wird die Dispersion unter kräftigem Rühren auf 80 °C erhitzt und die Polymerisation gestartet. Nach der Polymerisation wie im Beispiel f) wird auch in gleicher Weise, wie im Beispiel angegeben, aufgearbeitet. Als Schmiermittel wird 0,5 % Zinkstearat und als Alterungsschutzmittel 0,5 % Ionol® der Fa. Shell ( ≙ 2,6-Di-tert.-butyl-p-cresol) auf der Heißwalze eingearbeitet. Das granulierte Polymerisat läßt sich zu transparenten roten Formteilen verspritzen.

Beispiel h)

In einem kontinuierlich arbeitenden, überflutet gefahrenen Vorreaktor wird eine Lösung aus 99,95 Teilen Styrol, 0,04 Teilen des Farbstoffes aus Beispiel A) und 0,01 Teilen Di-tert.-butylperoxid eingefahren und bei einer Temperatur von 75 °C anpolymerisiert. Die aus dem Vorreaktor austretende, anpolymerisierte Lösung (Polystyrol-Gehalt 20 %) wird in einem 2-Wellenschneckenaggregat eingeführt. Die beiden Wellen laufen mit 20 Upm gegenläufig. Die vier heiz- bzw. kühlbaren Segmente der Schneckenmaschine werden in der Reihenfolge Produkteintritt - Produktaustritt auf 110 °C, 130 °C, 160 °C, 180 °C gehalten. Das Polymerisat verläßt den Schneckenreaktor mit einer Feststoffkonzentration von 80 %. In einem nachgeschalteten Extruder werden 3 Gew.-Teile Ionol® der Fa. Shell ( ≙ 2,6-Di-tert.-butyl-p-cresol) und 5 Gew.-Teile Octylalkohol pro 1000 Gew.-Teile Polymerlösung zudosiert, das Polymerisat entgast und anschließend granuliert. Das rot gefärbte Granulat kann zu Formteilen verarbeitet werden.

Beispiel i)

0,02 Teile des Farbstoffes aus Beispiel A) werden in 74,97 Teilen Styrol und 25 Teilen Acrylnitril bzw. Methacrylnitril gelöst. Nach Zugabe von 0,01 Teilen Di-tert.-butylperoxid wird die so erhaltene Lösung in einem kontinuierlich arbeitenden, überflutet gefahrenen Vorreaktor eingefahren. Die Polymerisation und Aufarbeitung erfolgt wie im Beispiel h) angegeben. Das transparente, rote Granulat kann nach den üblichen Methoden der Verarbeitung thermoplastischer Massen zu Profilen und Platten weiterverarbeitet werden.

Beispiel k)

In 99,97 Teilen Methylmethacrylat werden 0,03 Teile des Farbstoffes aus Beispiel A) gelöst. Nach Zugabe von 0,1 Teilen Dibenzoylperoxid wird die Lösung auf 120 °C erhitzt und die Polymerisation gestartet. Nach 30 Min. wird das anpolymerisierte Methylmethacrylat zwischen zwei Glasplatten bei 80 °C während zehn Stunden auspolymerisiert. Man erhält rote, transparente Polymethylmethacrylat-Platten.

Beispiel 1)

100 Teile Polyamid-6-Schnitzel, erhalten durch Polymerisation von ε-Caprolactam, werden mit 0,05 Teilen des Farbstoffes aus Beispiel A) in einer Schüttelmaschine innig vermischt. Die so erhaltenen gepuderten Schnitzel werden bei 260 °C in einem Extruder aufgeschmolzen, die erhaltene Schmelze durch eine Einloch-Düse vom Durchmesser 0,5 mm gepreßt und der austretende Faden mit einer Geschwindigkeit von ca. 25 m/Min. abgezogen. Der Faden läßt sich in heißem Wasser auf das Vierfache verstrecken. Erhalten wird ein transparent rot gefärbter Faden von ausgezeichneter Lichtechtheit. Will man eine gedeckte Färbung erhalten, so gibt man zusätzlich 0,5 Teile Titandioxid zu.

Die Verweilzeit im Extruder kann ohne Beeinträchtigung des Farbtons bis zu 30 Minuten betragen.

Beispiel 2

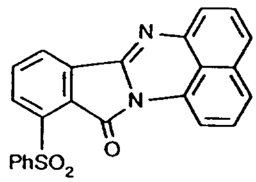

und

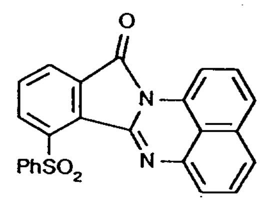

Verfährt man wie in der Herstellungsvorschrift in Beispiel 1 angegeben, aber unter Verwendung von 3-Benzolsulfonylphthalsäureanhydrid anstelle des dort eingesetzten 4-Isomeren, so erhält man obige Isomerenmischung in 90 %iger Ausbeute, die entsprechend der Färbebeipiele in Beispiel 1B) Kunststoffe in orangen Tönen färbt und ein hohes Echtheitsniveau liefert.

Beispiel 3

Verwendet man anstelle der isomerenreinen Benzolsulfonylphthalsäureanhydride gemäß den Beispielen 1 und 2 Mischungen aus 3- und 4-Benzolsulfonylphthalsäureanhydrid, so erhält man Mischungen aus den vier isomeren Farbstoffen wie in Beispiel 1 und 2 beschriebenen, die in Kunststoffen gemäß der Färbebeispiele in Beispiel 1B) gefärbt rote Farbtöne mit guten Echtheiten ergeben.

Beispiel 4

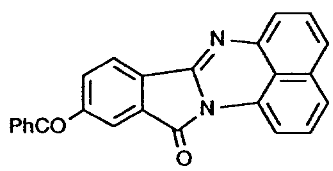

und

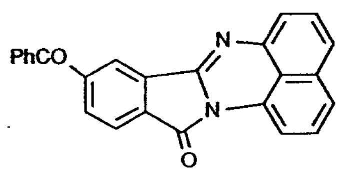

5,9 Teile 1,8-Diaminonaphthalin werden in 50 Teilen Dimethylformamid gelöst. Nach Zugabe von 9,1 Teilen 4-Benzoylphthalsäureanhydrid wird das Reaktionsgemisch 1 Stunde auf 140 ° C erhitzt Anschließend wird auf ca. 80 ° C abgekühlt und mit 60 Teilen Methanol verdünnt, bei Raumtemperatur abgesaugt und der Rückstand mit Methanol und Wasser gewaschen. Nach dem Trocknen erhält man 15,2 Teile der obigen Isomerenmischung. Analog zu den Färbebeispielen in Beispiel 1 gefärbt ergibt obiger Farbstoff gelbstichig rote, hochechte Färbungen.

Beispiel 5

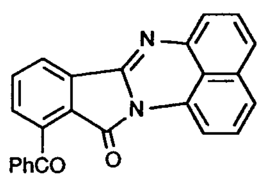

und

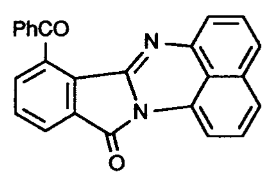

Ersetzt man in Beispiel 4 4-Benzoylphthalsäureanhydrid durch 3-Benzoylphthalsäureanhydrid und verfährt weiter wie dort angegeben, so erhält man eine Mischung von zwei isomeren Farbstoffen, die die angegebene Struktur besitzen.
(Ausbeute: 87 %)
Die obige Isomerenmischung führt, nach den Färbebeispielen in Beispiel 1 gefärbt, zu hochechten orangen

Färbungen.

Beispiel 6

Verwendet man in den Herstellungsvorschriften der Beispiele 4 bzw. 5 anstelle der isomerenreinen Benzoylphthalsäureanhydride Mischungen von 3- und 4-Benzoylphthalsäureanhydrid, so erhält man Mischungen der vier in den Beispielen 4 und 5 beschriebenen isomeren Benzoylphthaloperinone, die in Kunststoffen gemäß der Färbebeispiele in Beispiel 1B) ausgefärbt hochechte gelbstichig rote Farbtöne liefern.

Beispiele 7 bis 66

Auf analoge Weise wie in Beispiel 1A beschreiben, werden aus den Verbindungen der Formeln IV und V die in der Tabelle 1 beschriebenen Farbstoffe erhalten, die in Kunststoffen entsprechend 1B) a)-l) gefärbt werden und die in Tabelle 1 angegebenen Farbtöne erzielen.

| Beispiel | eingesetztes substituiertes Derivat der Phthalsäure (IV) | eingesetztes substituiertes 1,8-Diaminonaphthalin (V) | Ausbeute an Farbstoff analog Beispiel 1A | Farbton analog Beispiel 1B |
|---|---|---|---|---|
| 7 | 4-(4'-Methyl-benzolsulfonyl)- | unsubstituiert | 95 % | rot |
| 8 | 3-(3'-Methyl-benzolsulfonyl)- | -"- | 93 % | orange |
| 9 | 4-(2'-Methyl-benzolsulfonyl)- | -"- | 90 % | rot |
| 10 | 4-(4'-t-Butyl-benzolsulfonyl)- | -"- | 90 % | rot |
| 11 | 4-(2',4'-Dimethyl-benzolsulfonyl)- | -"- | 92 % | rot |
| 12 | 4-(4'-Chlor-benzolsulfonyl)- | -"- | 90 % | rot |
| 13 | 4-(3'-Chlor-benzolsulfonyl)- | -"- | 89 % | rot |
| 14 | 3-(2'-Chlor-benzoldulfonyl)- | -"- | 96 % | orange |
| 15 | 4-(4'-Fluorbenzolsulfonyl)- | -"- | 85 % | rot |
| 16 | 4-(4'-Brombenzolsulfonyl)- | -"- | 98 % | rot |
| 17 | 4-(3',4'-Dichlorbenzolsulfonyl)- | -"- | 99 % | rot |
| 18 | 4-(4'-Methoxybenzolsulfonyl)- | -"- | 87 % | rot |
| 19 | 3-(4'-Methoxybenzolsulfonyl)- | -"- | 86 % | orange |
| 20 | 4-(3'-Methoxybenzolsulfonyl)- | -"- | 85 % | rot |
| 21 | 4-(4'-Ethoxybenzolsulfonyl)- | -"- | 84 % | rot |
| 22 | 4-(3'-Butoxybenzolsulfonyl)- | -"- | 80 % | rot |
| 23 | 4-(1-Naphthalinsulfonyl)- | -"- | 99 % | rot |
| 24 | 4-(Methansulfonyl)- | -"- | 94 % | rot |
| 25 | 3-(Methansulfonyl)- | -"- | 91 % | orange |
| 26 | 4-(Ethansulfonyl)- | -"- | 93 % | rot |
| 27 | 4-(1-Butansulfonyl)- | -"- | 83 % | rot |
| 28 | 4-(Cyclohexansulfonyl)- | -"- | 88 % | rot |
| 29 | 4-(Acetyl)- | -"- | 90 % | rot |
| 30 | 4-(Propionyl)- | -"- | 90 % | rot |
| 31 | 4-(Butyryl)- | -"- | 85% | rot |
| 32 | 4-(Cyclohexancarbonyl)- | -"- | 87 % | rot |
| 33 | 4-(4'-Methylbenzoyl)- | -"- | 90 % | rot |
| 34 | 4-(4'-Ethylbenzoyl)- | -"- | 91 % | rot |
| 35 | 3-(4'-Chlorbenzoyl)- | -"- | 95 % | orange |
| 36 | 4-(3'-Chlorbenzoyl)- | -"- | 95 % | rot |
| 37 | 4-(2'-Chlorbenzoyl)- | -"- | 93 % | rot |
| 38 | 4-(2',4'-Dichlorbenzoyl)- | -"- | 98 % | rot |
| 39 | 4-(2',5'-Dichlorbenzoyl)- | -"- | 97 % | rot |
| 40 | 3-(3', 4'-Dichlorbenzoyl)- | -"- | 98 % | orange |
| 41 | 4-(2',6'-Dichlorbenzoyl)- | -"- | 99 % | rot |
| 42 | 3-(4'-Fluorbenzoyl)- | -"- | 89 % | orange |
| 43 | 4-(4'-tert.-Butylbenzoyl)- | -"- | 85 % | rot |
| 44 | 4-(4'-Methoxybenzoyl)- | -"- | 91 % | rot |
| 45 | 3-(2'-Methoxybenzoyl)- | -"- | 96 % | orange |
| 46 | 4-(3',4'-Dimethoxybenzoyl)- | -"- | 88 % | rot |
| 47 | 4-(2'-Acetoxybenzoyl)- | -"- | 80 % | rot |

(Fortsetzung)

| Beispiel | eingesetztes substituiertes Derivat der Phthalsäure (IV) | eingesetztes substituiertes 1,8-Diaminonaphthalin (V) | Ausbeute an Farbstoff analog Beispiel 1A | Farbton analog Beispiel 1B |
|---|---|---|---|---|
| 48 | 4-(1-Naphthoyl)- | unsubstituiert | 92 % | rot |
| 49 | 3-(2-Naphthoyl)- | -"- | 90 % | orange |
| 50 | 4-(Benzolsulfonyl)- | 4-Chlor | 96 % | gelbstichig rot |
| 51 | 3-(Benzolsulfonyl)- | 2,4-Chlor | 96 % | gelbstichig rot |
| 52 | 4-(Benzoyl)- | 4-Brom | 98 % | gelbstichig rot |
| 53 | 3-(Benzoyl)- | 4-Methyl | 89 % | orange |
| 54 | 4-(Benzolsulfonyl)- | 2,4-Dimethyl | 90 % | rot |
| 55 | 4-(Benzoyl)- | 4-Methyl-5-chlor- | 92 % | gelbstichig rot |
| 56 | 4-(Benzolsulfonyl)- | 4-Methoxy | 93 % | blaustichig rot |
| 57 | 4-(Benzoyl)- | 2-Ethoxy | 85 % | blaustichig rot |
| 58 | 4-(Benzolsulfonyl)- | 4,5-Dimethylen | 91 % | rot |
| 59 | 4-(Benzolsulfonyl)- | 4,5-Trimethylen | 93 % | rot |
| 60 | 3-(Benzolsulfonyl)- | 4,5-Dimethylen | 93 % | orange |
| 61 | 4-(Benzoyl)- | 4,5-Dimethylen | 96 % | rot |
| 62 | 3-(Benzoyl)- | 4,5-Dimethylen | 90 % | orange |
| 63 | 4-(4'-Chlorbenzoyl)- | 4,5-Dimethylen | 92 % | rot |
| 64 | 3-(2',4'-Dichlorbenzoyl)- | 4,5-Dimethylen | 98 % | orange |
| 65 | 4-(4'-Chlorbenzolsulfonyl) | 4,5-Dimethylen | 99 % | rot |
| 66 | 4-(3',4'-Dichlorbenzolsulfonyl)- | 4,5-Dimethylen | 98 % | rot |

Beispiel 67

Isoindolo[2,1-α]perimidin-12-on (Solvent Orange 60)

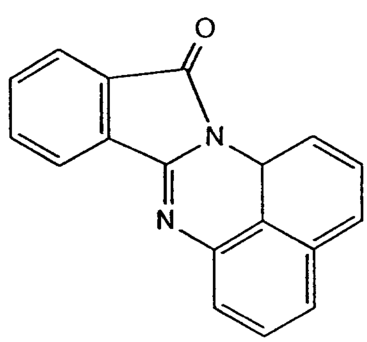

In 350 g Phenol werden bei 80 °C unter Überleiten von Stickstoff 82,5 g 1,8-Diaminonaphthalin eingetragen und gelöst. Nach dem Erwärmen auf 90 °C werden innerhalb 30 Minuten 78,8 g Phthalsäureanhydrid bei 90 bis 100 °C zugegeben. Anschließend erhöht man die Temperatur auf 130 °C und hält 2 Stunden bei dieser Temperatur. Dann wird auf ca. 80 °C abgekühlt und unter stetigem Rückfluß mit 350 ml Methanol verdünnt, 1 Stunde nachgerührt, auf Raumtemperatur abgekühlt und der ausgefallene Farbstoff abgesaugt Nach dem Waschen mit 400 ml Methanol und 2 l heißem Wasser wird bei 100 °C getrocknet. Man erhält 132,2 g des angegebenen Farbstoffes.

Ersetzt man Phenol durch die gleiche Menge p-Kresol, so erhält man 131,3 g des obigen Farbstoffs.

Beispiel 68

8,9,10,11-Tetrachlor-isoindolo[2,1-α]perimidin-12-on (Solvent Red 135)

In 37,0 kg aufgeschmolzenes Phenol trägt man bei 80°C 6,0 kg 1,8-Diaminonaphthalin ein, erwärmt das Gemisch auf 130° und gibt anschließend unter Abdestillieren des Reaktionswassers innerhalb einer halben Stunde 10,5 kg Tetrachlorphthalsäureanhydrid zu, hält 2 Stunden bei 130°, kühlt auf ca. 80°C ab und gibt anschließend 14,0 l Methanol so zu, daß der Rückfluß erhalten bleibt. Nach kürzerem Nachrühren wird heiß filtriert, mit 20,0 l Methanol und 40 l heißem Wasser gewaschen und bei 100°C getrocknet. Man erhält 14,2 kg des angegebenen Farbstoffes.

Verfährt man analog, ersetzt aber das Fällungsmittel Methanol durch 12,0 l heißes Wasser, so erhält man nach dem Isolieren und Waschen mit 20,0 l heißem Wasser 13,8 kg des angegebenen Farbstoffes in gleich guter Qualität.

Beispiel 69

Benz[4,5]isochino[2,1-α]perimidin-14-on (Solvent Red 179)

250 g Phenol werden bei ca. 60°C aufgeschmolzen. Man trägt unter Überleiten von Stickstoff 47,4 g 1,8-Diaminonaphthalin und 59,4 g 1,8-Naphthalsäureanhydrid ein, erhitzt in 1 Stunde auf 150°C und hält 2 Stunden bei dieser Temperatur. Das auf 80°C abgekühlte Reaktionsgemisch wird innerhalb von 30 Minuten bei einer Temperatur von 80 bis 65°C mit 120 ml Methanol versetzt, auf Raumtemperatur abgekühlt und abgesaugt. Nach dem Waschen mit 240 ml Methanol und Trocknen bei 150°C erhält man 88,8 g des angegebenen Farbstoffs in sehr guter Qualität.

Beispiel 70

Isoindolo[2,1-α]perimidin-12-on (Solvent Orange 60)

In eine Lösung von 300 g 1,8-Diaminonaphthalin in 1150 ml Methanol trägt man unter Stickstoff innerhalb 30 Minuten 281 g Phthalsäureanhydrid ein, verrührt 1 Stunde bei Raumtemperatur, erwärmt anschließend auf 70°C und hält 2 Stunden am Rückfluß. Danach werden 1250 g Phenol zu dem Reaktionsgemisch gegeben und die Temperatur auf 130°C gesteigert, wobei Methanol und Wasser abdestillieren. Man hält 1 Stunde auf Temperatur, kühlt auf 80°C ab und läßt anschließend 780 ml Methanol so einlaufen, daß das Reaktionsgemisch am Rückfluß bleibt.

Danach wird auf Raumtemperatur abgekühlt, abgesaugt, mit 500 ml Methanol und 2000 ml heißem Wasser gewaschen und getrocknet. Man erhält 481 g des angegebenen Farbstoffes.

Die in den Beispielen 67 bis 70 genannten Verfahrensvarianten eignen sich auch hervorragend zur Darstellung der in den Beispielen 1 bis 66 beschriebenen Farbstoffe; werden anstelle der Anhydride die entsprechenden freien Acylphthalsäuren eingesetzt, so legt man diese in Phenol vor und destilliert während 3 bis 5 Stunden bei 180°C zuerst zur Anhydridbildung das Wasser ab, kühlt dann auf 40-60°C ab, trägt dann das 1,8-Diamino-naphthalin ein und verfährt weiter wie in den Beispielen 67 bis 69 beschrieben.

**Patentansprüche**

1. Phthaloperinonfarbstoffe der allgemeinen Formel (I)

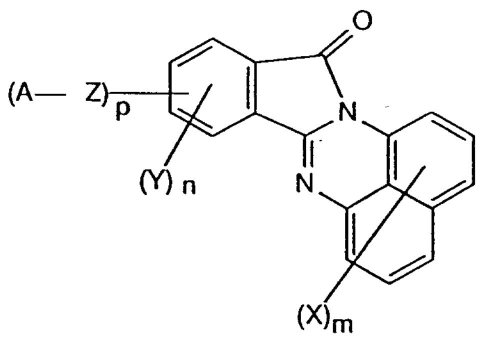

(I),

worin

Z $SO_2$ oder CO bedeutet,

A für gegebenenfalls substituiertes Alkyl oder Aryl steht,

X für $C_1$-$C_6$-Alkyl, Halogen, $C_1$-$C_6$-Alkoxy, $C_1$-$C_7$-Acyloxy oder für einen ankondensierten cycloaliphatischen Ring steht,

Y für $C_1$-$C_6$-Alkyl, $C_6$-$C_{10}$-Aryl, Halogen, $C_1$-$C_6$-Alkoxy, $C_1$-$C_7$-Acyloxy oder eine gegebenenfalls durch $C_1$-$C_7$-Acyl oder $C_1$-$C_6$-Alkyl substituierte Aminogruppe steht,

m eine Zahl von 0 bis 6,

n eine Zahl von 0 bis 3,

und

p 1 oder 2 bedeutet,

n + p für eine Zahl von 1 bis 4 steht und

für m >1 X jeweils verschiedene oder gleiche der obengenannten Bedeutungen haben kann, und

für n >1 Y jeweils verschiedene oder gleiche der oben genannten Bedeutungen haben kann.

**2.** Phthaloperinonfarbstoffe gemäß Anspruch 1, dadurch gekennzeichnet, daß

A für $C_1$-$C_{18}$-Alkyl steht, das gegebenenfalls ungesättigt ist und/oder gegebenenfalls mit Halogen, $C_1$-$C_4$-Alkoxy, Phenoxy oder gegebenenfalls durch Halogen, $C_1$-$C_4$-Alkyl oder $C_1$-$C_4$-Alkoxy substituiertes Phenyl weitersubstituiert ist oder

für Phenyl oder Naphthyl steht, das gegebenenfalls durch Halogen, $C_1$-$C_4$-Alkyl, Cyan, $C_1$-$C_4$-Alkylmercapto, $C_1$-$C_4$-Alkylcarbonylamino, Phenyl, Phenoxy oder $C_1$-$C_4$-Alkoxy substituiert ist, und

X für Chlor, Brom, Fluor, $OCH_3$, $OC_2H_5$, $OCH_2(C_6H_5)$, $OC_3H_7$,Methyl, Ethyl, n-Propyl, Isopropyl, n-Butyl, Isobutyl, sec.-Butyl, tert.-Butyl oder einen vorzugsweise in peri-Stellung ankondensierten cycloaliphatischen 5- oder 6-gliedrigen Ring,

Y für Fluor, Chlor, Brom, $OCH_3$, $NHCOCH_3$, $N(C_2H_5)_2$, Methyl, Ethyl, n-Propyl, Isopropyl, n-Butyl, Isobutyl, sec.-Butyl, tert.-Butyl oder für ein gegebenenfalls substituiertes Phenyl steht,

m eine Zahl von 0 bis 4,

n eine Zahl von 0 bis 2,

p 1 oder 2 bedeutet, und

n + p eine Zahl von 1 bis 3 bedeutet.

**3.** Phthaloperinonfarbstoffe gemäß Anspruch 1, dadurch gekennzeichnet, daß

X Chlor, Brom, Methyl, Ethyl oder einen in peri-Stellung ankondensierten cycloaliphatischen 5- oder 6-gliedrigenRing,

m eine Zahl von 0 bis 2,

n die Zähl 0 und

p 1 oder 2 bedeutet.

**4.** Phthaloperinonfarbstoffe gemäß Anspruch 1, worin m für 0 steht und p für 1 steht.

**5.** Phthaloperinonfarbstoffe gemäß Anspruch 1 der Formeln

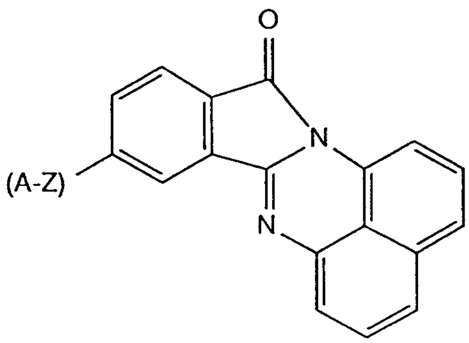

(IIa)

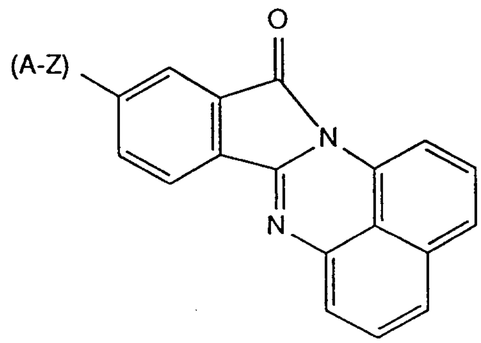

(IIb)

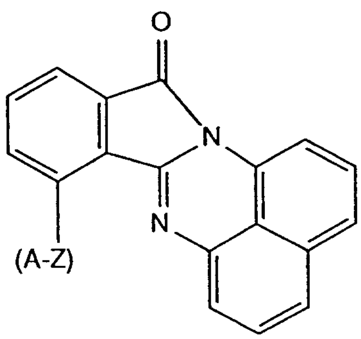

(IIIa)

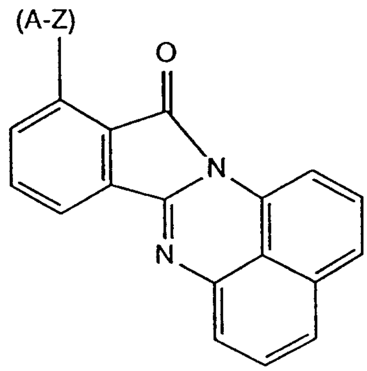

(IIIb)

oder beliebig zusammengesetzte Mischungen daraus, wobei bevorzugt beliebig zusammengesetzte Mischungen der Isomeren (IIa) und (IIb) bzw. (IIIa) und (IIIb) zu nennen sind.

**6.** Verfahren zur Herstellung von Phthaloperinonfarbstoffen gemäß Anspruch 1, dadurch gekennzeichnet, daß man Phthalsäuren der Formel (IV) bzw. deren funktionelle Derivate, vorzugsweise deren Anhydride

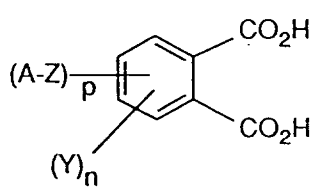

(IV),

in welcher

A, Z, Y, n und p die Bedeutung gemäß, Anspruch 1 besitzen,

mit Naphthalin-1,8-diaminen der Formel (V)

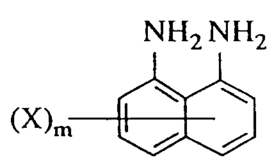

(V),

in welcher

X und m die Bedeutung gemäß Anspruch 1 haben,
in einem molaren Verhältnis von 1:0,8 bis 1:1,2, vorzugsweise in äquimolaren Mengen, bei einer Temperatur von 50-220 °C, gegebenenfalls in Gegenwart eines Katalysators, gegebenenfalls unter Druck und gegebenenfalls in Gegenwart eines Lösungsmittel umsetzt.

**7.** Verfahren zum Massefärben von Kunststoffen, dadurch gekennzeichnet, daß ein Phthaloperinonfarbstoff des Anspruchs 1 verwendet wird.

**8.** Verfahren zur Herstellung von Verbindungen der Formel (IV)

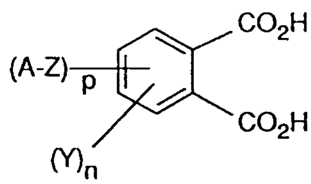

(IV),

worin
Z = $SO_2$,
A = Phenyl, das gegebenenfalls durch bis zu zwei Chlor- oder ein Bromatom substituiert ist, oder 1- oder 2-Naphthyl,
p = 1 oder 2, vorzugsweise 1,
n = 0 bedeutet,
dadurch gekennzeichnet, daß man Säurechloride der Formel (VI)

A - Z - Cl (VI)

mit o-Dialkylbenzolen der Formel (VII)

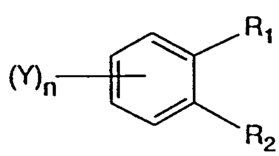

(VII),

worin
n = 0 und
$R_1$ und $R_2$ unabhängig voneinander für $C_1$-$C_4$-Alkyl, vorzugsweise Methyl oder gemeinsam für einen Tri- oder Tetramethylenrest stehen,
in Gegenwart saurer Katalysatoren zur Verbindungen der Formel (VIII)

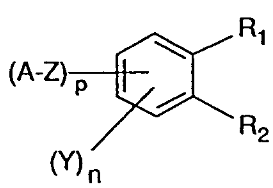

(VIII),

worin
p = 1,
umsetzt und diese zu Phthalsäuren der Formel (IV) oxidiert.

**9.** Kunststoffe gefärbt mit wenigstens einem Phthaloperinonfarbstoff gemäß Anspruch 1.

**10.** Verfahren zur Herstellung von Verbindungen der allgemeinen Formel (IX)

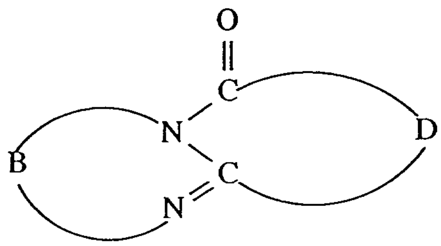

(IX),

das dadurch gekennzeichnet ist, daß man aromatische Dicarbonsäuren der Formel (X)

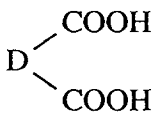

(X)

bzw. deren Anhydride oder Ester mit aromatischen Diaminen der Formel (XI)

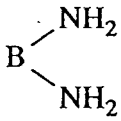

(XI)

in einem phenolischen Lösungsmittel umsetzt, wobei bedeuten:

D gegebenenfalls substituiertes ortho-Phenylen, 2,3-Naphthylen, peri(1,8)- Naphthylen oder Arylen aus mehr als zwei miteinander kondensierten Benzolringen und

B gegebenenfalls substituiertes ortho-Phenylen, ortho-Naphthylen, peri(1,8)- Naphtylen oder Arylen aus mehr als zwei miteinander kondensierten Benzolringen,

wobei die Arylenreste D und B in Formel (IX), die mehr als zwei miteinander kondensierte Benzolringe aufweisen, in ortho- oder entsprechend einer peri- Stellung im Naphthalin verbrückt sind.

Europäisches Patentamt

# EUROPÄISCHER RECHERCHENBERICHT

Nummer der Anmeldung
EP 94 11 2376

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 241 419 (SANDOZ AG)<br>*Seite 3, Formeln IIIa, IIIb *<br>*Seite 8, Formel 9 *<br>--- | 1-10 | C09B57/12<br>C08K5/3465 |
| D,A | DE-A-22 36 555 (BAYER AG)<br>* Seite 5, Formeln V *<br>* Seite 13, Zeile 11 - Zeile 26 *<br>--- | 1-8,10 | |
| A | FR-A-2 272 152 (BAYER AG)<br>* Seite 2, Formel 2 *<br>* Beispiele 5,6,8 *<br>----- | 1-10 | |

| RECHERCHIERTE SACHGEBIETE (Int.Cl.6) |
|---|
| C09B<br>C08K |

Der vorliegende Recherchenbericht wurde für alle Patentansprüche erstellt

| Recherchenort | Abschlußdatum der Recherche | Prüfer |
|---|---|---|
| DEN HAAG | 30. September 1994 | Ketterer, M |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument